# EUROPÄISCHE PATENTSCHRIFT

(11) **EP 3 614 848 B1**
(45) Veröffentlichungstag und Bekanntmachung des Hinweises auf die Patenterteilung: **18.08.2021**
(21) Anmeldenummer: 18718850.3
(22) Anmeldetag: 27.04.2018
(51) Int. Cl.: A21B 5/02, A21D 13/45

(54) **BACKPLATTENVORRICHTUNG UND WAFFELFORMKÖRPER**
DEVICE FOR PRODUCING BAKED WAFER SHEET AND CORRESPONDING WAFER SHEET
DISPOSITIF DE PRODUCTION D'UNE FEUILLE À GAUFRETTES ET FEUILLE À GAUFRETTE CORRESPONDANTE

(30) Priorität: 28.04.2017 EP 17168646
(43) Veröffentlichungstag der Anmeldung: 04.03.2020
(73) Patentinhaber: Haas Food Equipment GmbH, 2100 Leobendorf (AT)
(72) Erfinder: BIBARIC, Markus, 3400 Kierling (AT); JIRASCHEK, Stefan, 2202 Königsbrunn (AT)
(74) Vertreter: Puchberger & Partner Patentanwälte
(86) Internationale Anmeldenummer: PCT/EP2018/060838
(87) Internationale Veröffentlichungsnummer: WO 2018/197656

(56) Entgegenhaltungen:
- EP-A1- 1 967 069
- EP-A2- 0 221 033
- WO-A1-97/48282
- WO-A1-2014/198569
- DE-U1- 29 708 638

## Beschreibung

Die Erfindung betrifft eine Backplattenvorrichtung und einen Waffelformkörper gemäß den Merkmalen der Oberbegriffe der unabhängigen Patentansprüche.

Die Druckschriften WO 97482821 WO 2014198569 A1, EP 1667069 A1, DE 29708638 U1 und EP 0221033 A2 zeigen unterschiedliche Möglichkeiten zur Herstellung und Bearbeitung von Backwaren.

Viele gelockerte Backwaren weisen zwei charakteristische Elemente auf:
- eine weitgehend geschlossene und glatte Oberfläche, bedingt durch die Ausbildung eine Kruste während des Backens.
- Eine poröse innere Struktur die auf eine Lockerung durch Triebmittelgase und Wasserdampf zurückgeht.

Beispiele außerhalb des Gebietes der Erfindung sind Backwaren aus dem Bereich Brot, Gebäck oder Feingebäck, wo durch Ausbilden einer Backhaut und Verkleisterung der Stärke mittels Dampf und Heißluft eine geschlossene, oft auch glatte und glänzende Oberflächenkruste entsteht mit gänzlich anderen Eigenschaften als sie die weiche, poröse Krume im Inneren hat.

Erfindungsgemäße Beispiele mit signifikanten Strukturunterschieden zwischen Oberfläche und Kernbereich sind unter Druck gebackene Waffelbackwaren wie Flachwaffeln, Hohlwaffeln und Waffelbehälter. Hier kommt es im direkten Kontakt mit der heißen Backform unmittelbar beim Ausfüllen der Backform sofort zum Anbacken und zum Entstehen einer weitgehend geschlossen aussehenden Backhaut, während das Waffelinnere zufolge extensiver Wasserdampflockerung eine besonders offene und poröse Struktur aufweist, was auf dem im Vergleich zu anderen Backwaren mit etwa 55% bis 66% besonders hohen Wassergehalt von Waffelbackmassen beruht. Diese wenig dichte, großporige Innenstruktur ist auch verantwortlich für die sehr niedrige Dichte von Flachwaffeln, Hohlwaffeln und Waffelbehältern, die lediglich ca. 0,15 g/cm³ beträgt.

Wird es im Zuge der Weiterverarbeitung gelockerter Backprodukte erforderlich, diese mittels Trennschnitten zu zerteilen, ist im Schnittbereich die offene, poröse Struktur voll sichtbar. Diese weist naturgemäß auch ungünstigere technologische Eigenschaften auf als die geschlossene Außenhaut wie etwa ein stark erhöhtes Krümeln bzw. Ausbrechen oder ein schnelles Aufsaugen flüssiger oder pastöser Komponenten, wenn solche mit dem geschnittenen offenen Backwarenrand kombiniert werden. Überdies kommt es zu einem Einschluss von Luft, sodass beim Überziehen mit warmen Glasuren infolge thermischer Ausdehnung ein Platzen der entstehenden Blase erfolgt, was ein unansehnliches Loch im Überzug zurücklässt. Dadurch wird eine wesentliche Schutzfunktion solcher Überzüge, den Zutritt von Luftsauerstoff und/oder Feuchtigkeit zu minimieren, deutlich reduziert. Die Herstellung von gebackenen Waffeln als Flachwaffelblätter, Hohlwaffelblätter, Waffelbecher oder Waffeltüten in geschlossenen Metallbackformen mit Ausdampföffnungen ist seit langem Stand der Technik. Alle diese Produkte haben jedenfalls zwei charakteristische Merkmale gemeinsam:
- Erstens eine weitgehend geschlossene Backhaut an allen Außenseiten und
- zweitens eine weitgehend homogene Waffeldicke im Bereich von durchgehend etwa 0,5 mm bis zu etwa 5 mm, letzteres, wenn der durchgehende Kernbereich der typischerweise 0,5 bis 2 mm dick ist, durch Gravuren erweitert wird.

Die beim Waffelbacken erhaltenen Produkte weisen auf allen Seiten, auch an den schmalen Rändern, eine dichtere, glatte geschlossene Backhaut auf, allenfalls mit kleinen Öffnungen, welche die Dampfaustrittsöffnungen markieren. Diese Produkte weisen also alle einen gebackenen und damit optisch weitgehend geschlossenen Rand auf. Daneben haben sich etwa für die Herstellung von Waffelpralinen im Laufe der Jahre Verfahren etabliert, bei denen nach dem Backen der Hohlwaffelblätter durch entweder horizontales Abschneiden, Abschleifen, Abfräsen, Abhobeln oder durch vertikales Ausstanzen oder Aussägen der Backzusammenhang zwischen den als Waffelhalbschalen verbleibenden Hohlformen entfernt wird. Die so erhaltenen Waffelhalbschalen weisen dann im Trennbereich einen den ganzen Waffelquerschnitt umfassenden offenen, großporigen Rand ohne die geschlossene Backhaut auf. Solche offenen Ränder sind zum einen optisch unansehnlich, zum anderen haben sie naturgemäß ungünstigere technologische Eigenschaften als die geschlossene Außenhaut. So etwa ein stark erhöhtes Krümeln bzw. Ausbrechen oder ein schnelles Aufsaugen flüssiger oder pastöser Komponenten, wenn solche mit dem geschnittenen offenen Backwarenrand kombiniert werden. Weiters das Einschließen von Luft, sodass beim Überziehen mit warmen Glasuren infolge thermischer Ausdehnung ein Platzen der entstehenden Blase erfolgt, was ein unansehnliches Loch im Überzug zurücklässt. Dadurch wird eine wesentliche Schutzfunktion solcher Überzüge, den Zutritt von Luftsauerstoff und/oder Feuchtigkeit in der Aufbrauchsfrist zu minimieren, deutlich reduziert.

Aus wirtschaftlichen Gründen ist diese zweite Technik der offenen Ränder weit verbreitet, da das Einzelbacken von Hohlkörperwaffelhalbschalen mit geschlossenen Rändern im Vergleich zum Backen in Hohlwaffelblättern eine große Anzahl einzelner Backformen braucht, was einen signifikant höheren Investitions- und Platzbedarf zur Folge hat.

Die Waffel(blatt)dicke legt auch die Größe des offenen Randes fest. Stand der Technik ist eine homogene Dicke. Gemäß Stand der Technik wird ein Backzusammenhang in Normalstärke für das Abführen der hohen Wasseranteile von beispielsweise 55 bis 65% in den Waffelbackmassen als Dampf für notwendig erachtet. Als Backzusammenhang wird bei Hohlwaffelblättern das Waffelmaterial verstanden, das sich im Waffelblatt z.B. zwischen den Hohlkörperwaffelhalbschalen befindet.

Dem Stand der Technik sind Vorrichtungen, insbesondere Backöfen zur Herstellung von knusprig spröden Flachwaffeln oder Hohlwaffeln zu entnehmen. Bei diesen Öfen werden auf- und zuklappbare Backzangen durch einen beheizten Backraum eines Backofens geführt. Die knusprig spröde Konsistenz der Backprodukte resultiert aus dem Effekt, dass Backmassen oder Teige mit hohem Wasseranteil von etwa 50-70% unter hohem Druck ausgebacken werden. Dabei entweicht das Wasser der Backmasse in Form von Wasserdampf sehr rasch und hinterlässt dabei eine poröse, spröde Struktur. Um den Backprozess unter hohem Druck durchführen zu können, ist eine Verriegelungsvorrichtung vorgesehen. Über diese kann die Backzange verriegelt werden, sodass sich im Inneren ein Überdruck aufbauen kann. Nur durch diesen Überdruck kann der gewünschte Backverlauf erzielt werden.

Zwischen Ober- und Unterplatte muss genügend Freiraum bestehen, damit der Dampf seitlich aus der Backzange entweichen kann. Der Dampf wird gemäß Stand der Technik im Inneren des Waffelformkörpers nach außen geleitet. Die an der beheizten Backfläche anliegende Schicht des Waffelformkörpers erfährt beim Ausbacken nahezu keine Dampfdiffusion. Dadurch entsteht im Kontaktbereich zwischen der Backplatte und dem Waffelformkörper eine im Wesentlichen geschlossene und glatte Oberfläche. Diese Oberfläche ist im Vergleich zur porösen, großporigen Innenstruktur beispielsweise des Kerns der Waffel kleinporiger und dadurch einerseits optisch ansprechender und andererseits widerstandsfähiger gegen das Eindringen von Feuchtigkeit oder anderen migrierenden Stoffen.

Bei der Herstellung knusprig spröder Waffeln besteht ein sehr sensibler Zusammenhang zwischen der Zusammensetzung der Backmasse, der Backtemperatur, der Backdauer und insbesondere der Dicke des Waffelblattes. Je dünner das Waffelblatt ist, desto schneller ist dieses ausgebacken. Bei Überbacken von Waffelblättern kommt es zu einer ungewünschten Braun-Verfärbung sowie zu einer übermäßig spröden, trockenen Konsistenz der Waffel. Da das gesamte Waffelblatt in einer einzigen Backzange durch den Backraum geführt wird, besteht meist keine Möglichkeit, unterschiedliche Backzonen unterschiedlichen Temperaturen auszusetzen. Aus diesem Grund werden gemäß Stand der Technik Waffelblätter ausschließlich mit weitgehend konstanter Dicke hergestellt. Dies bedeutet, dass zumindest die Kerndicke des Waffelblattes über die gesamte Fläche in etwa konstant ist. Bei herkömmlichen Waffelblättern kann eine reliefartige Struktur, insbesondere eine Waffelgravur vorgesehen sein.

Ublicherweise werden die Waffelformkörper im Anschluss an das Backverfahren in einem Trennvorgang zerschnitten und vorher gegebenenfalls mit Cremen wie beispielsweise Schokoladecremen gefüllt. Durch das Zerschneiden der Waffelblätter wird das Waffelblatt im Schnittbereich geöffnet, sodass eine poröse großporige Fläche nach außen weist. Diese Fläche weist die obengenannten Nachteile auf. Insbesondere kann durch die Poren Feuchtigkeit eindringen, was in weiterer Folge dazu führt, dass die Waffel ihre knusprig spröde Textur verliert und insbesondere zäh oder weich wird. Zur Reduktion des Backabfalls wird insbesondere bei Backprodukten, die über einen Backzusammenhang miteinander zu einem Waffelformkörper verbunden sind, der Backzusammenhang gemahlen bzw. zu einem Pulver verarbeitet, um dieses Pulver wieder zu verwenden, beispielsweise in Cremefüllungen. Aus Effizienzgründen bei der Herstellung ist es vorteilhaft, so wenige Arbeitsschritte und so wenige Vorrichtungen wie möglich zu verwenden. Bei im Wesentlichen entlang der Hauptebene arbeitenden Fräsen zur Abtrennung des Backzusammenhangs werden jedoch in gemäß Stand der Technik die Backprodukte derart abgetrennt, sodass die Trennfläche eine grobe, offenporige Oberfläche aufweist. Bekannte Vorrichtungen, durch die die Waffelblätter im Bereich des dünnen Backzusammenhangs getrennt werden, funktionieren über Stanzen, wobei der ausgestanzte Backzusammenhang über eine eigene Vorrichtung gemahlen werden muss.

Aufgabe der Erfindung ist es nun, die Nachteile des Standes der Technik zu überwinden und insbesondere einen Waffelformkörper und eine Backplattenvorrichtung zur Bildung eines Waffelformkörpers zu schaffen, die eine effiziente Fertigung von Backprodukten ermöglicht.

Diese Aufgabe wird insbesondere durch die Merkmale der unabhängigen Patentansprüche gelöst.

Die Erfindung betrifft einen Waffelformkörper, insbesondere Backzwischenprodukt, aus einer unter Druck ausgebackenen, im unausgebackenen Zustand 55-70% Wasser enthaltenden Backmasse, wobei der Waffelformkörper mehrere entlang einer Hauptebene nebeneinander angeordnete Backprodukte mit einer Backproduktdicke umfasst, wobei der Waffelformkörper einen Backzusammenhang umfasst, durch den die Backprodukte miteinander verbunden sind, wobei der Backzusammenhang in jenen Bereichen, die die Backprodukte unmittelbar umgeben, jeweils einen Trennsteg mit einer Trennstegdicke bildet, und/oder wobei die Trennstegdicke kleiner ist als die Backproduktdicke.

Erfindungsgemäß ist vorgesehen, dass sich die Trennstege jeweils quer zur Hauptebene von dem Backprodukt weg erstrecken.

Erfindungsgemäß ist vorgesehen, dass die Backprodukte nur auf einer Seite der Hauptebene angeordnet sind und sich insbesondere bis zur Hauptebene erstrecken, dass Trennstege auf der anderen Seite der Hauptebene angeordnet sind und sich von der Hauptebene bis zu einer zur Hauptebene parallel verlaufenden Nebenebene erstrecken.

Erfindungsgemäß ist ebenfalls vorgesehen, dass der Abstand zwischen der Hauptebene und der Nebenebene und dadurch die quer zur Hauptebene gemessene Höhe der Trennstege mehr als 2mm und insbesondere zwischen 3mm und 10mm beträgt.

Gegebenenfalls ist vorgesehen, dass der Trennsteg eine Trennstegdicke aufweist, die weniger als 50% der Backproduktdicke, insbesondere weniger als 30% der Backproduktdicke, beträgt.

Gegebenenfalls ist vorgesehen, dass die Trennstege eine Trennstegdicke von maximal 0,5mm, insbesondere von 0,2mm bis 0,3mm aufweisen.

Gegebenenfalls ist vorgesehen, dass die Trennstege eine Trennstegdicke von maximal 1mm, insbesondere von 0,5mm bis 0,7mm aufweisen.

Gegebenenfalls ist vorgesehen, dass die Backprodukte eine Backproduktdicke von mehr als 1mm, insbesondere von 2mm bis 4mm aufweisen.

Gegebenenfalls ist vorgesehen, dass die Backprodukte über den Backzusammenhang miteinander verbunden sind.

Gegebenenfalls ist vorgesehen, dass die Backprodukte im Übergangsbereich zu den Trennstegen eine Schulter oder eine Einschnürung aufweisen.

Gegebenenfalls ist vorgesehen, dass sich der Übergangsbereich zur Verringerung der Dicke des Waffelformkörpers von der Backproduktdicke auf die Trennstegdicke, quer zur Hauptebene gemessen, über weniger als 5mm insbesondere innerhalb weniger als 2mm erstreckt.

Gegebenenfalls ist vorgesehen, dass der Backzusammenhang und die Trennstege des Backzusammenhangs eine durchgehende, konstante Trennstegdicke aufweisen und/oder dass die Backprodukte eine durchgehende, konstante Backproduktdicke aufweisen.

Gegebenenfalls ist vorgesehen, dass die Bereiche geringerer Dicke wie insbesondere die Trennstege einen höheren Ausbackgrad aufweisen als das Backprodukt, und insbesondere überbacken sind.

Gegebenenfalls ist vorgesehen, dass diese Bereiche mit höherem Ausbackgrad spröder sind als das Backprodukt.

Ebenfalls betrifft die Erfindung eine Backplattenvorrichtung, insbesondere Backzange mit einem Backplattenpaar, zur Herstellung unter Druck ausgebackener, spröder Waffelformkörper, umfassend:
- eine im Wesentlichen entlang der Nebenebene verlaufende erste Backplatte mit einer ersten Backfläche,
- eine im Wesentlichen entlang der Nebenebene verlaufende zweite Backplatte mit einer zweiten Backfläche,
- eine Bewegungsvorrichtung, über welche die erste Backplatte mit der zweiten Backplatte öffen- und schließbar verbunden ist,
- eine Verriegelungsvorrichtung zur Verriegelung der erste Backplatte mit der zweiten Backplatte in geschlossener Stellung,
wobei in geschlossener Stellung durch die erste Backfläche und die zweite Backfläche eine Backform gebildet ist, die im Wesentlichen der Negativform des Waffelformkörpers entspricht,
und wobei die Backform mehrere nebeneinander entlang der Hauptebene angeordnete Produkträume mit jeweils einer Produktdicke zur Bildung der Backprodukte umfasst, die jeweils von einem Spaltabschnitt mit einer Spaltdicke zur Bildung der Trennstege und des Backzusammenhangs umgeben ist, wobei die Spaltdicke kleiner ist als die Produktdicke.

Erfindungsgemäß ist vorgesehen, dass sich die Spaltabschnitte jeweils quer zur Hauptebene von dem Produktraum weg erstrecken.

Erfindungsgemäß ist vorgesehen, dass die Produkträume nur auf einer Seite der Hauptebene angeordnet sind und sich insbesondere bis zu der Hauptebene erstrecken.

Erfindungsgemäß ist vorgesehen, dass die Spaltabschnitte auf der anderen Seite der Hauptebene angeordnet sind und sich von der Hauptebene bis zu einer zur Hauptebene parallel verlaufenden Nebenebene erstrecken.

Erfindungsgemäß ist vorgesehen, dass der Abstand zwischen der Hauptebene und der Nebenebene und dadurch die quer zur Hauptebene gemessene Höhe des Spaltabschnitts mehr als 3mm und insbesondere zwischen 3mm und 10mm beträgt.

Gegebenenfalls ist vorgesehen, dass der Spaltabschnitt eine Spaltdicke aufweist, die weniger als 50% der Produktdicke, insbesondere weniger als 30% der Produktdicke, beträgt.

Gegebenenfalls ist vorgesehen, dass die Spaltabschnitte eine Spaltdicke von maximal 1mm, insbesondere von 0,5mm bis 0,7mm aufweisen.

Gegebenenfalls ist vorgesehen, dass die Spaltabschnitte eine Spaltdicke von maximal 0,5mm, insbesondere von 0,2mm bis 0,3mm aufweisen.

Gegebenenfalls ist vorgesehen, dass die Produkträume eine Produktdicke von mehr als 1mm, insbesondere von 2mm bis 4mm aufweisen.

Gegebenenfalls ist vorgesehen, dass die Spaltdicke bzw. die Trennstegdicke etwa halb so groß ist wie die Backproduktdicke bzw. wie die Produktdicke.

Gegebenenfalls ist vorgesehen, dass die Produkträume über die Spaltabschnitte miteinander verbunden sind.

Gegebenenfalls ist vorgesehen, dass die Produkträume im Übergangsbereich zu den Spaltabschnitten eine Schulter eine Einschnürung aufweisen.

Gegebenenfalls ist vorgesehen, dass sich der Übergangsbereich zur Verringerung der Dicke der Backform von der Produktdicke auf die Spaltdicke, quer zur Hauptebene gemessen, über weniger als 5mm insbesondere innerhalb weniger als 2mm erstreckt.

Gegebenenfalls ist vorgesehen, dass die Spaltabschnitte eine durchgehende, konstante Spaltdicke aufweisen und/oder dass die Produkträume eine durchgehende, konstante Produktdicke aufweisen.

Insbesondere betrifft die Erfindung einen Backofen zum Herstellen von vorzugsweise knusprig-spröden gebackenen Waffelformkörpern, wobei der Backofen einen Backraum und eine im Backofen kontinuierlich umlaufende und sich durch den Backraum bewegende, endlose Backzangenkette besitzt, die längs einer in sich geschlossenen Umlaufbahn angeordnet ist, die sich in zwei übereinander angeordneten Transportebenen erstreckt, wobei die Backzangenkette auf- und zuklappbare und im geschlossenen Zustand verriegelbare Backzangen enthält, die durch Aufklappen der Backzangen geöffnet und durch Zuklappen der Backzangen geschlossen werden, wobei eine Einrichtung zum Aufklappen der Backzangen, eine Ausgabestation, eine Beschickungsstation, eine Einrichtung zum Zuklappen der Backzangen und eine Verriegelungsvorrichtung zur Verriegelung der Backzangen im geschlossenen Zustand in Laufrichtung der Backzangen hintereinander angeordnet sind, wobei in der Ausgabestation eine die gebackenen Waffelformkörper aus den aufgeklappten Backzangen entnehmende Produktabnahmevorrichtung vorgesehen ist, wobei die Backzange als erfindungsgemäße Backplattenvorrichtung ausgebildet ist oder eine derartige Backplattenvorrichtung enthält.

Die Erfindung betrifft insbesondere eine neue backtechnische Anordnung zum Herstellen von Hohlkörperwaffelschalen in modifizierten Hohlwaffelbackformen. Nach dem Backvorgang können die gebackenen Hohlkörperwaffelhalbschalen in einem einfachen mechanischen Verfahren, insbesondere durch horizontales Abschneiden, Abschleifen, Abfräsen oder Abhobeln aus dem Waffelformkörper vereinzelt oder herausgelöst werden. Gleichzeitig werden mit dem neuen Verfahren auch die technologisch nachteiligen breiten offenporigen porösen Ränder verkleinert oder vemieden.

Die erfindungsgemäße Backplattenvorrichtung ist dazu eingerichtet, den erfindungsgemäßen Waffelformkörper herzustellen. Der erfindungsgemäße Waffelformkörper ist insbesondere ein Backzwischenprodukt, das aus einer unter Druck ausgebackenen, im unausgebackenen Zustand 55 bis 70 % Wasser enthaltenden, Backmasse gebacken wird. Derartige knusprig-spröde Waffelformkörper werden beispielsweise für Hohlwaffelschalen, gegossene Waffeltüten oder ähnliche Produkte verwendet. Zur effizienten Herstellung der Backprodukte ist es vorteilhaft, wenn die offenporige Trennfläche, entlang derer die Backprodukte von dem Backzusammenhang abgetrennt werden, möglichst klein gehalten wird. Dies kann insbesondere dadurch bewirkt werden, dass der Backzusammenhang eine geringe Dicke aufweist. Die geschlossenporigen Außenflächen des Backproduktes sind dadurch im Übergangsbereich zum Backzusammenhang zusammengeführt. Wird nun lediglich der dünne Backzusammenhang abgetrennt, so ist auch nur eine sehr schmale offenporige Trennfläche freigelegt. Bevorzugt geschieht die Abtrennung der Backprodukte vom Backzusammenhang über eine Bearbeitungsvorrichtung, die gleichzeitig eine Zerspanung des Backzusammenhangs bewirkt. Beispielsweise können Fräsen, Sägen oder andere Vorrichtungen verwendet werden. Bevorzugt ist vorgesehen, dass der Trennschnitt ein entlang der Hauptebene verlaufender Trennschnitt ist. Um trotz dieses entlang der Hauptebene verlaufenden Trennschnitts eine möglichst geschlossene Oberfläche der Backprodukte zu ermöglichen, umfasst der Backzusammenhang speziell ausgestaltete Trennstege.

Die Hauptebene folgt der Haupterstreckungsrichtung des Waffelformkörpers und/oder folgt jener Ebene, entlang derer die Backprodukte vom Backzusammenhang abgetrennt werden.

Diese Trennstege umgeben jeweils ein Backprodukt und erstrecken sich vom Backprodukt quer zur Hauptebene vom dem Backprodukt weg. Dadurch ist ein Trennsteg gebildet, der durch das Trennwerkzeug entlang der Hauptebene zerspant werden kann, ohne dabei die Backprodukte zu beschädigen.

Zur Berücksichtigung etwaiger Fertigungstoleranzen erstreckt sich der Trennsteg von der Hauptebene bis zu einer Nebenebene, wobei die Nebenebene bevorzugt parallel zur Hauptebene verläuft. Insbesondere weist die Nebenebene einen Abstand zur Hauptebene auf, durch den die Höhe des Trennstegs definiert ist. Der Trennsteg verläuft quer zur Hauptebene, weg von dem Backprodukt, sodass der Trennsteg abgeschnitten oder zerspant werden kann, ohne die Backprodukte zu zerstören. Bevorzugt erstreckt sich der Trennsteg um eine gewisse Höhe von dem Backprodukt weg.

Bevorzugt ist in allen Ausführungsformen vorgesehen, dass die Trennstege die Backprodukte und die Hauptebene um eine gewisse Höhe überragen, wobei Trennstege die Backprodukte bevorzugt in einer Richtung quer zur Hauptebene überragen.

Die Trennstege sind insbesondere ein Teil des Backzusammenhangs, der gegebenenfalls auch Abschnitte aufweist, die der Nebenebene folgen und die gegebenenfalls parallel zur Hauptebene und damit nicht quer zur Hauptebene verlaufen.

Die Backplattenvorrichtung kann von ihrem Grundaufbau in allen Ausführungsformen wie eine herkömmliche Backplattenvorrichtung und insbesondere wie eine herkömmliche Backzange ausgebildet sein, wobei aber die durch die Backplattenvorrichtung gebildete Backform speziell ausgebildet ist. Die Backplattenvorrichtung ist bevorzugt Teil einer herkömmlichen, industriellen Herstellungsanlage zur Herstellung von knusprig spröden Waffelformkörpern. Insbesondere können mehrere derartige Backplattenvorrichtungen in einem industriellen Backofen mit einer Backzangenkette eingesetzt werden.

Die Backplattenvorrichtung umfasst bevorzugt eine im Wesentlichen entlang der Hauptebene verlaufende erste Backplatte mit einer ersten Backfläche und eine im Wesentlichen entlang der Hauptebene verlaufende zweite Backplatte mit einer zweiten Backfläche. Das bedeutet, dass die plattenförmigen Grundkörper der Backplatten jeweils entlang bzw. parallel zu der Hauptebene verlaufen, obwohl der Verlauf der Backflächen, insbesondere bei der Herstellung von Hohlwaffeln, vom Verlauf der Hauptebene abweichen kann.

Zum Vereinzeln der Backprodukte aus dem Waffelformkörper und insbesondere zum Zerspanen des Backzusammenhangs bzw. der Trennstege können herkömmliche Vorrichtungen zum Vereinzeln der Backprodukte eingesetzt werden, bei denen ein Trennschnitt entlang der Hauptebene, insbesondere ein horizontaler Trennschnitt, vorgenommen wird.

In weiterer Folge wird die Erfindung anhand der Figuren weiter beschrieben, wobei
Fig. 1 eine schematische Darstellung eines Backofens,
Fig. 2 ein Detail eines Schnitts einer möglichen Backplattenvorrichtung, und
Fig. 3 eine Schrägansicht eines möglichen Waffelformkörpers
zeigen.

Wenn nicht anders angegeben, so entsprechen die Bezugszeichen folgenden Komponenten: Backzange 1, Waffelformkörper 2, erste Backplatte 3, erste Backfläche 4, zweite Backplatte 5, zweite Backfläche 6, Hauptebene 7, Backform 8, Nebenebene 9, Produktraum 10, Produktdicke 11, Spaltabschnitt 12, Spaltdicke 13, Höhe 14, Backprodukt 15, Backproduktdicke 16, Backzusammenhang 17, Trennsteg 18, Trennstegdicke 19, Übergangsbereich 20, Bewegungsvorrichtung 21, Verriegelungsvorrichtung 22, Backraum 23, Backzangenkette 24, Einrichtung (zum Aufklappen der Backzangen) 25, Ausgabestation 26, Beschickungsstation 27, Produktabnahmevorrichtung 28, Transportebene 29, Einrichtung (zum Zuklappen der Backzangen) 30.

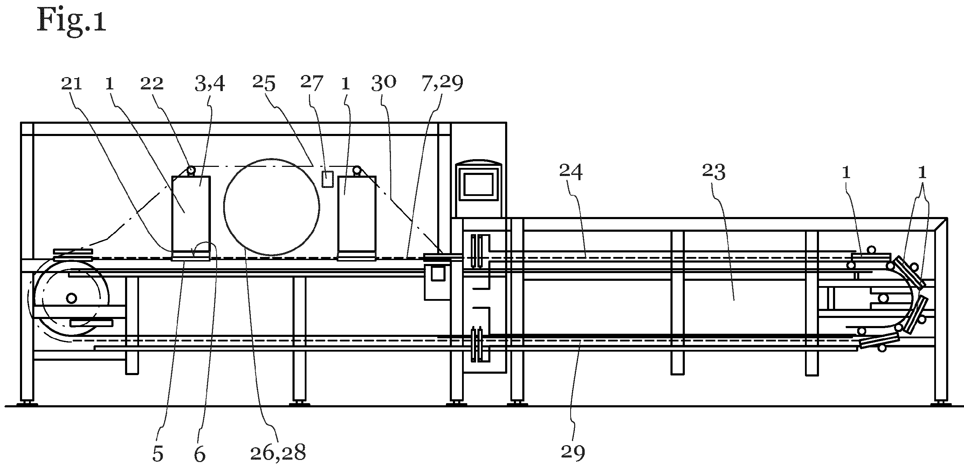

Fig. 1 zeigt einen Backofen zum Herstellen von vorzugsweise knusprig spröden, gebackenen Waffelformkörpern 2. Der Backofen umfasst einen Backraum 23 und eine im Backofen kontinuierlich umlaufende und sich durch den Backraum 23 bewegende endlose Backzangenkette 24. Die Backzangenkette 24 trägt die Backplattenvorrichtungen, die in dieser Ausführungsform als Backzangen 1 ausgebildet sind. Die Backzangenkette 24 erstreckt sich zumindest abschnittsweise entlang zweier Transportebenen 29. Entlang der Backzangenkette 24 sind eine Einrichtung 25 zum Aufklappen der Backzangen 1, eine Ausgabestation 26 mit einer Produktentnahmevorrichtung 28 zur Entnahme der nicht dargestellten Waffelformkörper 2, eine Beschickungsstation 27 zum Auftrag der Backmasse auf die Backplattenvorrichtungen, sowie eine Einrichtung 30 zum Zuklappen der Backzangen 1 vorgesehen. Der in Fig. 1 dargestellte Backofen kann von seinem Grundaufbau einem herkömmlichen Backofen zur industriellen Herstellung von knusprig spröden Waffelformkörpern 2 entsprechen, wobei jedoch die Backplattenvorrichtungen erfindungsgemäß ausgestaltet sind. Die Backplattenvorrichtungen sind insbesondere als Backzangen 1 ausgebildet und umfassten jeweils eine erste Backplatte 3 mit einer ersten Backfläche 4, sowie eine zweite Backplatte 5 mit einer zweiten Backfläche 6. Die Backplattenvorrichtungen definieren jeweils eine Hauptebene 7, die im Wesentlichen entlang der Haupterstreckungsfläche der Backplatten 3, 4 in geschlossenem Zustand verläuft. In der vorliegenden Darstellung verläuft die Hauptebene 7 folglich über weite Strecken entlang der Transportebene 29 und bei der vorliegenden Ausführungsform insbesondere waagrecht. Die erste Backplatte 3 ist gegenüber der zweiten Backplatte 5 über eine Bewegungsvorrichtung 21 bewegbar verbunden, wobei die Bewegungsvorrichtung 21 insbesondere als Gelenk oder Scharnier ausgebildet ist. Ferner umfasst die Backplattenvorrichtung, insbesondere die Backzange 1, eine Verriegelungsvorrichtung 22 zur Verriegelung der Backplattenvorrichtung und insbesondere zum Ausbacken knusprig spröder Waffelformkörper 2.

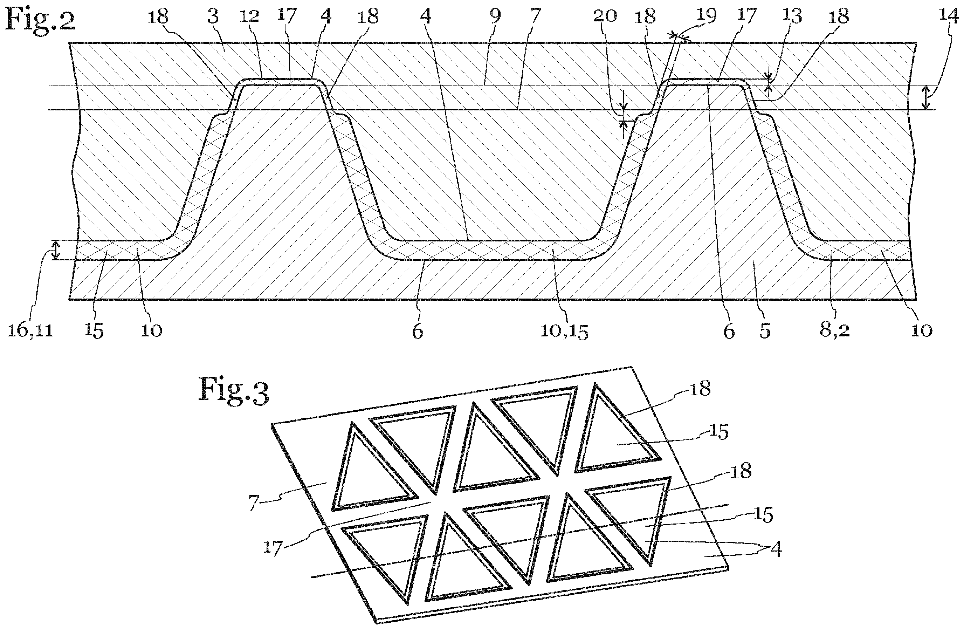

In dem Backofen gemäß Fig. 1 kann eine Backplattenvorrichtung vorgesehen sein, deren Detail beispielsweise in Fig. 2 dargestellt ist.

Fig. 2 zeigt ein Detail einer schematischen Schnittdarstellung einer exemplarischen Backplattenvorrichtung sowie einen darin angeordneten Waffelformkörper 2, wobei die Schnittebene normal zur Hauptebene 7 verläuft. Die Backplattenvorrichtung umfasst eine erste Backplatte 3 mit einer ersten Backfläche 4. Ferner umfasst die Backplattenvorrichtung eine zweite Backplatte 5 mit einer zweiten Backfläche 6. Die Backplatten 3, 5 erstrecken sich im Wesentlichen entlang einer Hauptebene 7. Die Hauptebene 7 verläuft in dieser Ansicht normal zur Bildebene. Durch die beiden Backflächen 4, 6 ist eine Backform 8 gebildet, die im Wesentlichen der Negativform des zu bildenden Waffelformkörpers 2 entspricht. Die Backform 8 umfasst mehrere Produkträume 10, sowie mehrere Spaltabschnitte 12. Die Produkträume 10 weisen eine Produktdicke 11 auf. Die Spaltabschnitte 12 weisen eine Spaltdicke 13 auf. Bevorzugt ist vorgesehen, dass die Spaltdicke 13 kleiner ist als die Produktdicke 11. Insbesondere definiert der Produktraum 10 mit seiner Produktdicke 11 ein Backprodukt 15 mit einer Backproduktdicke 16. Ferner definiert der Spaltabschnitt 12 mit seiner Spaltdicke 13 einen Backzusammenhang 17, der einen Trennsteg 18 mit einer Trennstegdicke 19 enthält. Die Backprodukte 15 sind über den Backzusammenhang 17 miteinander verbunden. Die Trennstegdicke 19 ist bevorzugt kleiner als die Backproduktdicke 16. Durch die bevorzugt vorgesehene gleichmäßige Beheizung der Backplatten 3, 5 kommt es dadurch zu einem Überbacken des Trennstegs 18, wodurch dieser spröde und insbesondere spröder ist als das Backprodukt 15.

Jene Bereiche des Backzusammenhangs 17, die die Backprodukte 15 umgeben oder unmittelbar umgeben, sind als Trennstege 18 ausgebildet. Analog dazu weist die Backform 8 in jenem Bereich des Spaltabschnitts 12, der an die Produkträume 10 angrenzt, eine Form zur Bildung eines Trennstegs 18 auf.

Der Trennsteg 18 ist insbesondere derart ausgebildet, dass eine Abtrennung des Backzusammenhangs 17 entlang eines Schnitts erfolgen kann, der entlang der Hauptebene 7 geführt wird. Zur Berücksichtigung etwaiger Fertigungstoleranzen erstreckt sich der Trennsteg 18 von der Hauptebene 7 bis zu einer Nebenebene 9, wobei die Nebenebene 9 bevorzugt parallel zur Hauptebene 7 verläuft. Insbesondere weist die Nebenebene 9 einen Abstand zur Hauptebene 7 auf, durch den die Höhe 14 des Trennstegs 18 definiert ist. Der Trennsteg 18 verläuft quer zur Hauptebene 7, weg von dem Backprodukt 15, sodass der Trennsteg 18 abgeschnitten oder zerspant werden kann, ohne die Backprodukte 15 zu zerstören. Insbesondere erstreckt sich der Trennsteg 18 um eine gewisse Höhe 14 von dem Backprodukt 15 weg. Die Trennstege 18 sind insbesondere ein Teil des Backzusammenhangs 17, der in der vorliegenden Ausführungsform auch Abschnitte aufweist, die der Nebenebene 9 folgen und die parallel zur Hauptebene 7 und damit nicht quer zur Hauptebene 7 verlaufen.

Die Backprodukte 15 des Waffelformkörpers 2 sind insbesondere schalenförmig, becherförmig, halbschalenförmig oder hohlkörperförmig ausgebildet und erstrecken sich auf eine Seite der Hauptebene 7. Die Trennstege 18 hingegen erstrecken sich auf die andere Seite der Hauptebene 7. Die Hauptebene 7 definiert somit die Trennebene zwischen Trennstegen 18 und Backprodukten 15. Im Bereich der Hauptebene 7 ist ein Übergangsbereich 20 angeordnet, in dem das Backprodukt 15 von seiner Backproduktdicke 16 auf die Trennstegdicke 19 übergeht. Dieser Übergangsbereich 20 ist bevorzugt ein Teil des Backprodukts 15, sodass durch das Abtrennen des Trennstegs 18 lediglich eine schmale Schnittfläche gebildet wird, deren Breite der Trennstegdicke 19 entspricht. Der Übergangsbereich 20 ist bevorzugt so klein wie möglich ausgebildet, sodass eine Schulter bzw. eine Einschnürung gebildet wird. Dadurch sind die im Wesentlichen geschlossen ausgebildeten Außenflächen des Backprodukts 15 weitestmöglich zueinander geführt, womit die poröse, offenporige Trennfläche minimiert wird.

Gemäß einer bevorzugten Ausführungsform verlaufen die Trennstege 18 entlang jener Fläche, die durch die Seitenwände der becherförmig ausgebildeten Backprodukte 15 gebildet sind.

Fig. 3 zeigt eine schematische Schrägansicht eines möglichen Waffelformkörpers 2, wie er beispielsweise in der Backform gemäß Fig. 2 hergestellt werden kann. Dieser Waffelformkörper 2 umfasst mehrere Backprodukte 15, die über einen Backzusammenhang 17 miteinander verbunden sind. Teile des Backzusammenhangs 17 sind als Trennstege 18 ausgebildet, die sich, wie in Fig. 2 dargestellt, von den Backprodukten 15 derart wegerstrecken, sodass eine Abtrennung der Backprodukte 15 von dem Backzusammenhang 17 durch einen der Hauptebene 7 folgenden Trennschnitt ermöglicht ist. Ferner ist in Fig. 3 auch eine Schnittlinie eingezeichnet, die beispielsweise die Schnittlinie der Darstellung des Waffelformkörpers der Fig. 2 ist.

## Patentansprüche

1. **Waffelformkörper (2),** insbesondere Backzwischenprodukt, aus einer unter Druck ausgebackenen, im unausgebackenen Zustand 55-70% Wasser enthaltenden Backmasse,
- wobei der Waffelformkörper (2) mehrere entlang einer Hauptebene (7) nebeneinander angeordnete Backprodukte (15) mit einer Backproduktdicke (16) umfasst,
- wobei der Waffelformkörper (2) einen Backzusammenhang (17) umfasst, durch den die Backprodukte (15) miteinander verbunden sind,
- wobei der Backzusammenhang (17) in jenen Bereichen, die die Backprodukte (15) unmittelbar umgeben, jeweils einen Trennsteg (18) mit einer Trennstegdicke (19) bildet, wobei die Trennstegdicke (19) kleiner ist als die Backproduktdicke (16), **dadurch gekennzeichnet,**
- **dass** sich die Trennstege (18) jeweils quer zur Hauptebene (7) von dem Backprodukt (15) weg erstrecken,
- **dass** die Backprodukte (15) nur auf einer Seite der Hauptebene (7) angeordnet sind und sich insbesondere bis zur Hauptebene (7) erstrecken,
- **dass** Trennstege (18) auf der anderen Seite der Hauptebene (7) angeordnet sind und sich von der Hauptebene (7) bis zu einer zur Hauptebene (7) parallel verlaufenden Nebenebene (9) erstrecken,
- und **dass** der Abstand zwischen der Hauptebene (7) und der Nebenebene (9) und dadurch die quer zur Hauptebene (7) gemessene Höhe (14) der Trennstege (18) mehr als 2mm und insbesondere zwischen 3mm und 10mm beträgt.

2. Waffelformkörper (2) nach Anspruch 1, **dadurch gekennzeichnet, dass** der Trennsteg (18) eine Trennstegdicke (19) aufweist, die weniger als 50% der Backproduktdicke (16), insbesondere weniger als 30% der Backproduktdicke (16), beträgt.

3. Waffelformkörper (2) nach einem der Ansprüche 1 bis 2, **dadurch gekennzeichnet,**
- **dass** die Trennstege (18) eine Trennstegdicke (19) von maximal 1mm, insbesondere von 0,5mm bis 0,7mm aufweisen, und/oder,
- **dass** die Backprodukte (15) eine Backproduktdicke (16) von mehr als 1mm, insbesondere von 2mm bis 4mm aufweisen.

4. Waffelformkörper (2) nach einem der Ansprüche 1 bis 3, **dadurch gekennzeichnet, dass** die Backprodukte (15) über den Backzusammenhang (17) miteinander verbunden sind.

5. Waffelformkörper (2) nach einem der Ansprüche 1 bis 4, **dadurch gekennzeichnet,**
- **dass** die Backprodukte (15) im Übergangsbereich (20) zu den Trennstegen (18) eine Schulter oder eine Einschnürung aufweisen,
- und **dass** sich der Übergangsbereich (20) zur Verringerung der Dicke des Waffelformkörpers (2) von der Backproduktdicke (16) auf die Trennstegdicke (19), quer zur Hauptebene (7) gemessen, über weniger als 5mm insbesondere innerhalb weniger als 2mm erstreckt.

6. Waffelformkörper (2) nach einem der Ansprüche 1 bis 5, **dadurch gekennzeichnet, dass** der Backzusammenhang (17) und die Trennstege (18) des Backzusammenhangs (17) eine durchgehende, konstante Trennstegdicke (19) aufweisen und/oder dass die Backprodukte (15) eine durchgehende, konstante Backproduktdicke (16) aufweisen.

7. Waffelformkörper (2) nach einem der Ansprüche 1 bis 6, **dadurch gekennzeichnet, dass** die Bereiche geringerer Dicke wie insbesondere die Trennstege (18) einen höheren Ausbackgrad aufweisen als das Backprodukt (15), und insbesondere überbacken sind, und dass diese Bereiche mit höherem Ausbackgrad spröder sind als das Backprodukt (15).

8. **Backplattenvorrichtung,** insbesondere Backzange (1) mit einem Backplattenpaar (3, 5), zur Herstellung unter Druck ausgebackener, spröder **Waffelformkörper (2) nach einem der Ansprüche 1 bis 7** umfassend:
- eine im Wesentlichen entlang der Nebenebene (9) verlaufende erste Backplatte (3) mit einer ersten Backfläche (4),
- eine im Wesentlichen entlang der Nebenebene (9) verlaufende zweite Backplatte (5) mit einer zweiten Backfläche (6),
- eine Bewegungsvorrichtung (21), über welche die erste Backplatte (3) mit der zweiten Backplatte (5) öffen- und schließbar verbunden ist,
- eine Verriegelungsvorrichtung (22) zur Verriegelung der erste Backplatte (3) mit der zweiten Backplatte (5) in geschlossener Stellung,
wobei in geschlossener Stellung durch die erste Backfläche (4) und die zweite Backfläche (6) eine Backform (8) gebildet ist, die im Wesentlichen der Negativform des Waffelformkörpers (2) entspricht, und wobei die Backform (8) mehrere nebeneinander entlang der Hauptebene (7) angeordnete Produkträume (10) mit jeweils einer Produktdicke (11) zur Bildung der Backprodukte (15) umfasst, die jeweils von einem Spaltabschnitt (12) mit einer Spaltdicke (13) zur Bildung der Trennstege (18) und des Backzusammenhangs (17) umgeben ist, wobei die Spaltdicke (13) kleiner ist als die Produktdicke (11), **dadurch gekennzeichnet,**
- **dass** sich die Spaltabschnitte (12) jeweils quer zur Hauptebene (7) von dem Produktraum (10) weg erstrecken- dass die Produkträume (10) nur auf einer Seite der Hauptebene (7) angeordnet sind und sich insbesondere bis zu der Hauptebene (7) erstrecken,
- **dass** die Spaltabschnitte (12) auf der anderen Seite der Hauptebene (7) angeordnet sind und sich von der Hauptebene (7) bis zu einer zur Hauptebene (7) parallel verlaufenden Nebenebene (9) erstrecken,
- und **dass** der Abstand zwischen der Hauptebene (7) und der Nebenebene (9) und dadurch die quer zur Hauptebene (7) gemessene Höhe (14) des Spaltabschnitts (12) mehr als 2mm und insbesondere zwischen 3mm und 10mm beträgt.

9. Backplattenvorrichtung nach Anspruch 8, **dadurch gekennzeichnet, dass** der Spaltabschnitt (12) eine Spaltdicke (13) aufweist, die weniger als 50% der Produktdicke (11), insbesondere weniger als 30% der Produktdicke (11), beträgt.

10. Backplattenvorrichtung nach einem der Ansprüche 8 oder 9, **dadurch gekennzeichnet,**
- **dass** die Spaltabschnitte (12) eine Spaltdicke (13) von maximal 1mm, insbesondere von 0,5mm bis 0,7mm aufweisen, und/oder,
- **dass** die Produkträume eine Produktdicke (11) von mehr als 1mm, insbesondere von 2mm bis 4mm aufweisen.

11. Backplattenvorrichtung nach einem der Ansprüche 8 bis 10, **dadurch gekennzeichnet, dass** die Produkträume (10) über die Spaltabschnitte (12) miteinander verbunden sind.

12. Backplattenvorrichtung nach einem der Ansprüche 8 bis 11, **dadurch gekennzeichnet,**
- **dass** die Produkträume (10) im Übergangsbereich (20) zu den Spaltabschnitten (12) eine Schulter eine Einschnürung aufweisen,
- und **dass** sich der Übergangsbereich (20) zur Verringerung der Dicke der Backform (8) von der Produktdicke (11) auf die Spaltdicke (13), quer zur Hauptebene (7) gemessen, über weniger als 5mm insbesondere innerhalb weniger als 2mm erstreckt.

13. Backplattenvorrichtung nach einem der Ansprüche 8 bis 12, **dadurch gekennzeichnet, dass** die Spaltabschnitte (12) eine durchgehende, konstante Spaltdicke (13) aufweisen und/oder dass die Produkträume eine durchgehende, konstante Produktdicke (11) aufweisen.

14. **Backofen** zum Herstellen von vorzugsweise knusprig-spröden gebackenen **Waffelformkörpern (2) nach einem der Ansprüche 1 bis 7,** wobei der Backofen einen Backraum (23) und eine im Backofen kontinuierlich umlaufende und sich durch den Backraum (23) bewegende, endlose Backzangenkette (24) besitzt, die längs einer in sich geschlossenen Umlaufbahn angeordnet ist, die sich in zwei übereinander angeordneten Transportebenen (29) erstreckt, wobei die Backzangenkette (24) auf- und zuklappbare und im geschlossenen Zustand verriegelbare Backzangen (1) enthält, die durch Aufklappen der Backzangen (1) geöffnet und durch Zuklappen der Backzangen (1) geschlossen werden, wobei eine Einrichtung (25) zum Aufklappen der Backzangen (1), eine Ausgabestation (26), eine Beschickungsstation (27), eine Einrichtung (30) zum Zuklappen der Backzangen (1) und eine Verriegelungsvorrichtung (22) zur Verriegelung der Backzangen (1) im geschlossenen Zustand in Laufrichtung der Backzangen (1) hintereinander angeordnet sind, wobei in der Ausgabestation (26) eine die gebackenen Waffelformkörper (2) aus den aufgeklappten Backzangen (1) entnehmende Produktabnahmevorrichtung (28) vorgesehen ist, **dadurch gekennzeichnet, dass** die Backzange (1) als Backplattenvorrichtung **nach einem der Ansprüche 8 bis 13** ausgebildet ist.

## Claims

1. **A shaped wafer body** (2), in particular an intermediate bakery product, made of a baking mass baked through under pressure and containing 55 to 70 % water in an unbaked state,
- wherein the shaped wafer body (2) comprises multiple bakery products (15) with a bakery product thickness (16), which are arranged next to one another along a main plane (7),
- wherein the shaped wafer body (2) comprises a bakery product connection (17), through which the bakery products (15) are connected to one another,
- wherein, in each of the areas which directly surround the bakery products (15), the bakery product connection (17) forms a separating bar (18) with a separating bar thickness (19), wherein the separating bar thickness (19) is smaller than the bakery product thickness (16),
**characterized**
- **in that** each of the separating bars (18) extends away from the bakery product (15) transversely to the main plane (7),
- **in that** the bakery products (15) are arranged on only one side of the main plane (7) and in particular extend to the main plane (7),
- **in that** separating bars (18) are arranged on the other side of the main plane (7) and extend from the main plane (7) to a secondary plane (9), which extends parallel to the main plane (7),
- and **in that** the distance between the main plane (7) and the secondary plane (9) and, consequently, the height (14) of the separating bars (18) measured transversely to the main plane (7) is more than 2 mm and in particular between 3 mm and 10 mm.

2. The shaped wafer body (2) according to claim 1, **characterized in that** the separating bar (18) has a separating bar thickness (19) of less than 50 % of the bakery product thickness (16), in particular less than 30 % of the bakery product thickness (16).

3. The shaped wafer body (2) according to one of claims 1 to 2, **characterized**
- **in that** the separating bars (18) have a separating bar thickness (19) of not more than 1 mm, in particular of 0.5 mm to 0.7 mm, and/or
- **in that** the bakery products (15) have a bakery product thickness (16) of more than 1 mm, in particular of 2 mm to 4 mm.

4. The shaped wafer body (2) according to one of claims 1 to 3, **characterized in that** the bakery products (15) are connected to one another via the bakery product connection (17).

5. The shaped wafer body (2) according to one of claims 1 to 4, **characterized**
- **in that** the bakery products (15) have a shoulder or constriction in the transition region (20) to the separating bars (18),
- and **in that** the transition region (20), measured transversely to the main plane (7), extends across less than 5 mm, in particular across less than 2 mm, for reducing the thickness of the shaped wafer body (2) from the bakery product thickness (16) to the separating bar thickness (19).

6. The shaped wafer body (2) according to one of claims 1 to 5, **characterized in that** the bakery product connection (17) and the separating bars (18) of the bakery product connection (17) have a continuous, constant separating bar thickness (19) and/or **in that** the bakery products (15) have a continuous, constant bakery product thickness (16).

7. The shaped wafer body (2) according to one of claims 1 to 6, **characterized in that** the areas with a smaller thickness, such as in particular the separating bars (18), have a higher bake-through degree than the bakery product (15), and are in particular overbaked, and **in that** these areas with a higher bake-through degree are more brittle than the bakery product (15).

8. **A baking plate assembly,** in particular a baking tong (1) with a pair of baking plates (3, 5), for making **shaped wafer bodies (2) according to one of claims 1 to 7,** which are baked through under pressure and are brittle, comprising:
- a first baking plate (3), which substantially extends along the secondary plane (9) and has a first baking surface (4),
- a second baking plate (5), which substantially extends along the secondary plane (9) and has a second baking surface (6),
- a motion device (21), via which the first baking plate (3) is connected to the second baking plate (5) in such a way that they can be opened and closed,
- a locking means (22) for locking the first baking plate (3) with the second baking plate (5) in the closed position,
wherein, in the closed position, the first baking surface (4) and the second baking surface (6) form a baking mold (8), which substantially corresponds to the negative shape of the shaped wafer body (2),
and wherein the baking mold (8) comprises multiple product spaces (10), which are arranged next to one another along the main plane (7) and each have a product thickness (11), for forming the bakery products (15), wherein each of the product spaces (10) is surrounded by a gap section (12) with a gap thickness (13) for forming the separating bars (18) and the bakery product connection (17), wherein the gap thickness (13) is smaller than the product thickness (11),
**characterized**
- **in that** each of the gap sections (12) extends away from the product space (10) transversely to the main plane (7),
- **in that** the product spaces (10) are arranged on only one side of the main plane (7) and in particular extend to the main plane (7),
- **in that** the gap sections (12) are arranged on the other side of the main plane (7) and extend from the main plane (7) to a secondary plane (9), which extends parallel to the main plane (7),
- and **in that** the distance between the main plane (7) and the secondary plane (9) and, consequently, the height (14) of the gap section (12) measured transversely to the main plane (7) is more than 2 mm and in particular between 3 mm and 10 mm.

9. The baking plate assembly according to claim 8, **characterized in that** the gap section (12) has a gap thickness (13) of less than 50 % of the product thickness (11), in particular less than 30 % of the product thickness (11).

10. The baking plate assembly according to one of claims 8 or 9, **characterized**
- **in that** the gap sections (12) have a gap thickness (13) of not more than 1 mm, in particular of 0.5 mm to 0.7 mm, and/or
- **in that** the product spaces have a product thickness (11) of more than 1 mm, in particular of 2 mm to 4 mm.

11. The baking plate assembly according to one of claims 8 to 10, **characterized in that** the product spaces (10) are connected to one another via the gap sections (12).

12. The baking plate assembly according to one of claims 8 to 11, **characterized**
- **in that** the product spaces (10) have a shoulder or constriction in the transition region (20) to the gap sections (12),
- and **in that** the transition region (20), measured transversely to the main plane (7), extends across less than 5 mm, in particular across less than 2 mm, for reducing the thickness of the baking mold (8) from the product thickness (11) to the gap thickness (13).

13. The baking plate assembly according to one of claims 8 to 12, **characterized in that** the gap sections (12) have a continuous, constant gap thickness (13) and/or **in that** the product spaces have a continuous, constant product thickness (11).

14. A **baking oven** for making preferably crispy brittle baked **shaped wafer bodies (2) according to one of claims 1 to 7,** wherein the baking oven has a baking chamber (23) and an endless chain of baking tongs (24), which moves in a continuously circulating manner through the baking chamber (23) in the baking oven and is arranged along a self-contained path, which extends in two transport planes (29) arranged one on top of the other, wherein the chain of baking tongs (24) contains baking tongs (1), which can be opened and closed and can be locked in the closed state and which can be opened by folding the baking tongs (1) open and closed by folding the baking tongs (1) closed, wherein an arrangement (25) for opening the baking tongs (1), an output station (26), a filling station (27), an arrangement (30) for closing the baking tongs (1) and a locking means (22) for locking the baking tongs (1) in the closed state are arranged in the running direction of the baking tongs (1) one after the other, wherein a product extraction means (28), which extracts the baked shaped wafer bodies (2) from the opened baking tongs (1), is provided in the output station (26), **characterized in that** the baking tong (1) is designed as a **baking plate assembly according to one of claims 8 to 13.**

## Revendications

1. **Une pièce moulée de gaufrette** (2), en particulier un produit de cuisson intermédiaire, fabriquée à partir d'une masse à cuire cuite sous pression et contenant 55-70% d'eau à l'état non cuit,
- dans laquelle la pièce moulée de gaufrette (2) comprend une pluralité de produits de cuisson (15) disposés les uns à côté des autres le long d'un plan principal (7) et ayant une épaisseur de produit de cuisson (16),
- dans laquelle la pièce moulée de gaufrette (2) comprend une interconnexion de cuisson (17) par laquelle les produits de cuisson (15) sont reliés entre eux,
- dans laquelle l'interconnexion de cuisson (17) forme une barrette de séparation (18) avec une épaisseur de barrette de séparation (19) dans chacune des zones qui entourent directement les produits de cuisson (15), l'épaisseur de barrette de séparation (19) étant inférieure à l'épaisseur de produit de cuisson (16),
**caractérisée**
- **en ce que** les barrettes de séparation (18) s'étendent chacune à l'écart du produit de cuisson (15) transversalement par rapport au plan principal (7),
- **en ce que** les produits de cuisson (15) ne sont disposés que sur un côté du plan principal (7) et s'étendent en particulier jusqu'au plan principal (7),
- **en ce que** des barrettes de séparation (18) sont disposées de l'autre côté du plan principal (7) et s'étendent depuis le plan principal (7) jusqu'à un plan secondaire (9) parallèle au plan principal (7),
- et **en ce que** la distance entre le plan principal (7) et le plan secondaire (9) et donc la hauteur (14) des barrettes de séparation (18) mesurée transversalement au plan principal (7) est supérieure à 2 mm et en particulier comprise entre 3 mm et 10 mm.

2. La pièce moulée de gaufrette (1) selon la revendication 1, **caractérisée en ce que** la barrette de séparation (18) présente une épaisseur de barrette de séparation (19) qui est inférieure à 50 %, en particulier inférieur à 30 %, de l'épaisseur de produit de cuisson (16).

3. La pièce moulée de gaufrette (2) selon l'une des revendications 1 à 2, **caractérisée en ce que** les barrettes de séparation (18) présentent une épaisseur de barrette de séparation (19) maximale de 1 mm, en particulier de 0,5 mm à 0,7 mm, et/ou **en ce que** les produits de cuisson (15) présentent une épaisseur de produit de cuisson (16) maximale de 1 mm, en particulier de 2 mm à 4 mm.

4. La pièce moulée de gaufrette (2) selon l'une des revendications 1 à 3, **caractérisée en ce que** les produits de cuisson (5) sont reliés entre eux par l'interconnexion de cuisson (17).

5. La pièce moulée de gaufrette (2) selon l'une des revendications 1 à 4, **caractérisée**
- **en ce que** les produits de cuisson (15) présentent un épaulement ou un rétrécissement dans la zone de transition (20) avec les barrettes de séparation (18),
- et **en ce que** la zone de transition (20) s'étend sur moins de 5 mm, en particulier sur moins de 2 mm, pour réduire l'épaisseur de la pièce moulée de gaufrette (2) de l'épaisseur de produit de cuisson (16) à l'épaisseur de barrette de séparation (19), mesurée transversalement au plan principal (7).

6. La pièce moulée de gaufrette (2) selon l'une des revendications 1 à 5, **caractérisée en ce que** l'interconnexion de cuisson (17) et les barrettes de séparation (18) de l'interconnexion de cuisson (17) présentent une épaisseur de barrette de séparation (19) continue et constante et/ou **en ce que** les produits de cuisson (15) présentent une épaisseur de produit de cuisson (16) continue et constante.

7. La pièce moulée de gaufrette (2) selon l'une des revendications 1 à 6, **caractérisée en ce que** les zones d'une épaisseur inférieure, comme en particulier les barrettes de séparation (18), présentent un degré de cuisson plus élevé que le produit de cuisson (15), et en particulier sont surcuites, et **en ce que** ces zones à degré de cuisson plus élevé sont plus fragiles que le produit de cuisson (15).

8. **Un dispositif de plaque de cuisson,** en particulier une pince de cuisson (1) avec une paire de plaques de cuisson (3, 5), pour la fabrication de **pièces moulées de gaufrette (2)** fragiles et cuites sous pression **selon l'une des revendications 1 à 7,** comprenant :
- une première plaque de cuisson (3) s'étendant sensiblement le long du plan secondaire (9) avec une première surface de cuisson (4),
- une seconde plaque de cuisson (5) s'étendant sensiblement le long du plan secondaire (9) avec une seconde surface de cuisson (6),
- un dispositif de déplacement (21) par lequel la première plaque de cuisson (3) est reliée à la seconde plaque de cuisson (5) de manière à pouvoir être ouverte et fermée,
- un dispositif de verrouillage (22) pour le verrouillage de la première plaque de cuisson (3) avec la seconde plaque de cuisson (5) dans la position fermée,
- dans lequel, dans la position fermée, la première surface de cuisson (4) et la seconde surface de cuisson (6) forment un moule de cuisson (8) qui correspond sensiblement à la forme négative de la pièce moulée de gaufrette (2),
et dans lequel le moule de cuisson (8) comprend une pluralité d'espaces de produit (10) disposés côte à côte le long du plan principal (7) et ayant une épaisseur de produit (11) pour former les produits de cuisson (15), chaque espace de produit (10) étant entouré par une partie d'interstice (12) ayant une épaisseur d'interstice (13) pour former les barrettes de séparation (18) et l'interconnexion de cuisson (17), l'épaisseur d'interstice (13) étant inférieure à l'épaisseur de produit (11),
**caractérisé**
- **en ce que** les parties d'interstice (12) s'étendent chacune à l'écart de l'espace de produit (10) transversalement par rapport au plan principal (7),en ce que les espaces de produit (10) ne sont disposés que sur un côté du plan principal (7) et s'étendent en particulier jusqu'au plan principal (7),
- **en ce que** les parties d'interstice (12) sont disposées de l'autre côté du plan principal (7) et s'étendent depuis le plan principal (7) jusqu'à un plan secondaire (9) parallèle au plan principal (7),
- et **en ce que** la distance entre le plan principal (7) et le plan secondaire (9) et donc la hauteur (14) de la partie d'interstice (12) mesurée transversalement au plan principal (7) est supérieure à 2 mm et en particulier comprise entre 3 mm et 10 mm.

9. Le dispositif de plaque de cuisson selon la revendication 8, **caractérisé en ce que** la partie d'interstice (12) présente une épaisseur d'interstice (13) qui est inférieure à 50 %, en particulier inférieur à 30 %, de l'épaisseur de produit (11).

10. Le dispositif de plaque de cuisson selon l'une des revendications 8 ou 9, **caractérisé**
- **en ce que** les parties d'interstice (12) présentent une épaisseur d'interstice (13) maximale de 1 mm, en particulier de 0,5 mm à 0,7 mm, et/ou
- **en ce que** les espaces de produit présentent une épaisseur de produit (11) de plus de 1 mm, en particulier de 2 mm à 4 mm.

11. Le dispositif de plaque de cuisson selon l'une des revendications 8 à 10, **caractérisé en ce que** les espaces de produit (10) sont reliés entre eux par les parties d'interstice (12).

12. Le dispositif de plaque de cuisson selon l'une des revendications 8 à 11, **caractérisé**
- **en ce que** les espaces de produit (10) présentent un épaulement ou un rétrécissement dans la zone de transition (20) avec les parties d'interstice (12),
- et **en ce que** la zone de transition (20) s'étend sur moins de 5 mm, en particulier sur moins de 2 mm, pour réduire l'épaisseur du moule de cuisson (8) de l'épaisseur de produit (11) à l'épaisseur d'interstice (13), mesurée transversalement au plan principal (7).

13. Le dispositif de plaque de cuisson selon l'une des revendications 8 à 12, **caractérisé en ce que** les parties d'interstice (12) présentent une épaisseur d'interstice (13) continue et constante et/ou **en ce que** les espaces de produit présentent une épaisseur de produit (11) continue et constante.

14. **Un four** pour la fabrication de **pièces moulées de gaufrette (2)** de préférence croustillantes et fragiles **selon l'une des revendications 1 à 7,** le four présentant une chambre de cuisson (23) et une chaîne sans fin de pinces de cuisson (24) qui circule en continu dans le four et se déplace à travers la chambre de cuisson (23) et qui est disposée le long d'une voie de circulation autonome qui s'étend dans deux plans de transport (29) disposés l'un au-dessus de l'autre, la chaîne de pinces de cuisson (24) contenant des pinces de cuisson (1) pouvant être ouvertes et fermées et pouvant être verrouillées à l'état fermé, qui sont ouvertes par l'ouverture des pinces de cuisson (1) et fermées par la fermeture des pinces de cuisson (1), dans lequel un dispositif (25) pour ouvrir les pinces de cuisson (1), un poste de décharge (26), un poste de chargement (27), un dispositif (30) pour fermer les pinces de cuisson (1) et un dispositif de verrouillage (22) pour verrouiller les pinces de cuisson (1) à l'état fermé sont disposés les uns derrière les autres dans la direction de déplacement des pinces de cuisson (1), dans lequel un dispositif d'enlèvement de produit (28) est prévu dans le poste de décharge (26) pour enlever les pièces moulées de gaufrette (2) cuites des pinces de cuisson (1) ouvertes, **caractérisé en ce que** la pince de cuisson (1) est réalisée sous forme d'un dispositif de plaque de cuisson **selon l'une des revendications 8 à 13.**
